# EUROPÄISCHE PATENTSCHRIFT

(11) **EP 1 722 189 B1**
(45) Veröffentlichungstag und Bekanntmachung des Hinweises auf die Patenterteilung: **06.01.2010**
(21) Anmeldenummer: 06002611.9
(22) Anmeldetag: 09.02.2006
(51) Int. Cl.: G01B 5/012, G01B 7/012

(54) **Antaststift und damit ausgestattetes Tastsystem**
Feeler and measuring system equipped therewith
Tige de palpage et système de palpage équipé de celle-ci

(30) Priorität: 11.05.2005 DE 102005022482
(43) Veröffentlichungstag der Anmeldung: 15.11.2006
(73) Patentinhaber: Dr. Johannes Heidenhain GmbH, 83292 Traunreut (DE)
(72) Erfinder: Schroll, Thomas, 83301 Traunreut (DE)

(56) Entgegenhaltungen:
- DE-A1- 2 041 723
- US-A- 4 524 523
- US-A- 5 355 589

## Beschreibung

Die Erfindung betrifft einen Antaststift, gemäß dem Oberbegriff des Anspruchs 1, sowie ein damit ausgestattetes Tastsystem, entsprechend dem Anspruch 9.

Ein derartiges Tastsystem wird häufig dauerhaft auf einem Tisch einer Werkzeugmaschine befestigt und dient zur Vermessung eines Werkzeuges der Werkzeugmaschine. In einer Prüfroutine wird das Werkzeug, welches beispielsweise in einer Spindel der Werkzeugmaschine eingespannt ist, gegen einen Antastteller des Tastsystems bewegt. Dabei kann das Werkzeug auch im rotierenden Zustand vermessen werden.

Sobald eine Berührung des Antasttellers durch das Werkzeug auftritt, wird ein Schaltsignal z. B. an eine Numerische Steuerung der Werkzeugmaschine gesendet. Nachdem die Ist-Position des Werkzeugs bzw. der Spindelachse durch Positionsmessgeräte der Werkzeugmaschine stets ermittelt wird, kann der aktuelle Ist-Radius des Werkzeugs errechnet werden. Ggf. können dann Korrekturen in der Numerische Steuerung für die nachfolgenden Bearbeitungsprozesse berücksichtigt werden.

Damit das Schaltsignal sicher auch bei geringster Auslenkung erzeugt wird, ist im Tastsystem eine Messeinrichtung, etwa eine optische Messeinrichtung vorgesehen. Über einen Antaststift wird die Auslenkung des Antasttellers mechanisch zur Messeinrichtung übertragen. Im Hinblick auf die Messgenauigkeit ist es wichtig, dass der Antaststift steif ausgeführt ist. Andererseits kann nicht ausgeschlossen werden, dass unbeabsichtigte Bewegungen des Werkzeugs auftreten können. Damit dadurch unzulässige Krafteinleitungen in die Messeinrichtung unterbunden werden, sind häufig Sollbruchstellen an den Antaststiften als Schutzvorrichtungen vorgesehen. Entsprechende Sollbruchstellen müssen also relativ steif ausgeführt sein.

In der EP 0 269 286 B1 ist ein Tastsystem beschrieben, das zur Vermessung eines Werkzeuges in einer Werkzeugmaschine geeignet ist. Eine Sollbruchstelle ist dort für den Antaststift nicht vorgesehen.

In der EP 0 126 207 B1 ist ein Tastkopf beschrieben, dessen Belastungen infolge einer unkontrollierten Kollision in Richtung der Längsachse des Taststifts reduziert wird, indem der Taststift zweigeteilt ausgeführt ist, wobei die aneinander grenzenden Flächen der Teile des Taststifts abgeschrägt sind. Die Bauweise hat unter anderem den Nachteil, dass derartige Taststifte relativ aufwändig herzustellen sind.

Der Erfindung liegt daher die Aufgabe zu Grunde, einen vergleichsweise einfach herstellbaren Antaststift der eingangs genannten Art zu schaffen, welcher unempfindlich gegenüber unkontrollierten Kollisionen ist, insbesondere wenn eine Kollisionsrichtung parallel zur Längsachse des Tastelements vorliegt. Ferner soll ein Tastsystem geschaffen werden, das präzise Messergebnisse liefert und unempfindlich ist.

Diese Aufgabe wird erfindungsgemäß durch die Merkmale des Anspruches 1 bzw. 9 gelöst.

Der Antaststift umfasst eine Sollbruchstelle, welche zwischen einem ersten Abschnitt und einem zweiten Abschnitt des Antaststifts angeordnet ist, wobei die beiden Abschnitte jeweils eine Längsachse aufweisen. Der Antaststift ist derart gestaltet, dass im Bereich der Sollbruchstelle zumindest an zwei axial versetzten Punkten zumindest eine der genannten Längsachsen aus der Außenkontur des Antaststifts austritt. Unter axial versetzten Punkten ist im Folgenden zu verstehen, dass die beiden Punkte bezüglich der Längsachse versetzt angeordnet sind. Die Außenkontur ist die Außenfläche oder die Oberfläche des Antaststifts. Die in der Anmeldung vorgenommenen geometrischen Beziehungen beziehen sich natürlich auf einen Antaststift, wie er im Normalfall vorliegt, also im Neuzustand, bzw. in einem Zustand in dem keine Verformung durch eine äußere Belastung, wie sie beispielsweise im Anschlagzustand auftreten.

In weiterer Ausgestaltung der Erfindung weisen die beiden Abschnitte eine zylindrische Grundform auf, mit einer gemeinsamen Längsachse.

In einer bevorzugten Ausgestaltung der Erfindung weist die Sollbruchstelle Stegbereiche auf, die sich in axialer Richtung erstrecken und bezüglich der Umfangsrichtung versetzt angeordnet sind. Die Querschnitte der Stegbereiche sind also bezüglich der Längsachse unterschiedlich orientiert, bzw. sind um die Längsachse relativ zueinander gedreht angeordnet.

Mit Vorteil ist der Antaststift so ausgestaltet, dass der maximale Durchmesser der Sollbruchstelle kleiner oder gleich dem Durchmesser des ersten Abschnitts oder der des zweiten Abschnitts ist. Das heißt, dass der Bereich der Sollbruchstelle durchmesserbezogen nicht über den Außendurchmesser des ersten Abschnitts oder der des zweiten Abschnitts ragt. In weiterer Ausgestaltung der Erfindung weisen die beiden Abschnitte den gleichen Durchmesser auf.

Gemäß einer vorteilhaften Ausbildung der Erfindung umfasst die Sollbruchstelle zwei Ausnehmungen, die bezüglich der Umfangsrichtung um 180° versetzt angeordnet sein können. Entsprechend der geometrischen Ausgestaltung des Antaststifts überschneiden sich die Querschnitte der Ausnehmungen, wenn man parallel zur Längsachse auf den Antaststift blickt.

Die Ausnehmungen sind ferner mit Vorteil jeweils von drei ebenen Flächen umrandet.

Alternativ dazu kann gemäß einer bevorzugten Ausführungsform aber auch der Antaststift so gestaltet sein, dass dessen Sollbruchstelle eine wendelförmige Ausnehmung umfasst. Der Wendelgang umfasst dann Stegbereiche, welche bezüglich der Umfangsrichtung versetzt angeordnet sind.

Durch die optimierte Charakteristik des Antaststifts bezüglich einerseits seiner Steifigkeit und andererseits seinem Bruchverhalten ist der Antaststift besonders gut für Tastsysteme mit Messeinrichtungen geeignet, die ausnehmend präzise sind. Denn gerade bei derartigen Messeinrichtungen würde sich eine ungenügende Steifigkeit (insbesondere in einer Ebene, die orthogonal zur Längsachse des Antaststifts ausgerichtet ist) extrem bemerkbar machen. Andererseits sind solche Messeinrichtungen auch nicht unempfindlich gegenüber mechanischen Überbelastungen, die durch die spezielle Ausgestaltung der Sollbruchstelle des Antaststifts vermieden wird. Insbesondere werden durch die Sollbruchstelle wirksam auch Überbelastungen parallel zur Längsachse des Antaststifts ausgeschlossen. Ausnehmend präzise Messeinrichtungen arbeiten oft nach einem optischen Messprinzip oder einem druckempfindlichen Messprinzip (z. B. mit Piezo-Sensoren oder Dehnmess-Sensoren), wobei die Erfindung aber auch Tastsysteme umfasst, die einen Kontaktsensor aufweisen.

Vorteilhafte Ausbildungen der Erfindung entnimmt man den abhängigen Ansprüchen.

Weitere Einzelheiten und Vorteile des erfindungsgemäßen Antastshifts bzw.Tastsystems ergeben sich aus der nachfolgenden Beschreibung zweier Ausführungsbeispiele anhand der beiliegenden Figuren.

Es zeigen die
- Figur 1: ein Tastsystem mit einem Antaststift,
- Figur 2a: eine erste Seitenansicht eines Antaststifts, gemäß einem ersten Ausführungsbeispiel
- Figur 2b: eine gegenüber der ersten Seitenansicht um 90° gedrehte zweite Seitenansicht eines Antaststifts,
- Figur 2c: einen Schnitt Z-Z im Bereich der Sollbruchstelle des Antaststifts,
- Figur 3a: eine perspektivische Ansicht eines Antaststiftes gemäß einem zweiten Ausführungsbeispiel,
- Figur 3b: eine Draufsicht auf den Antaststift gemäß dem zweiten Ausführungsbeispiel

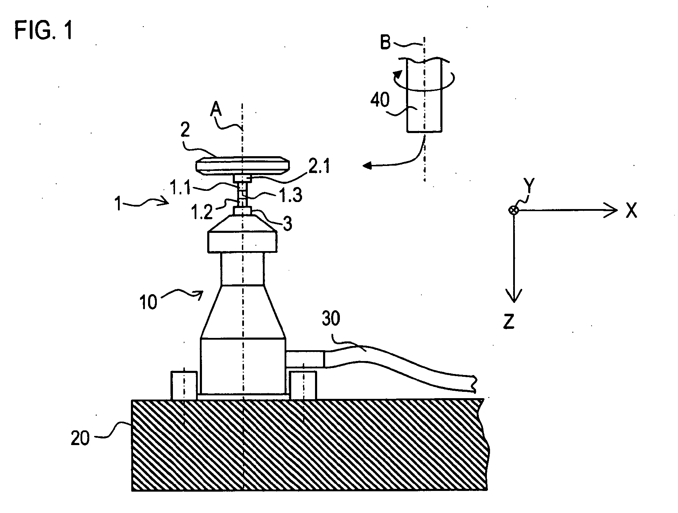

In der Figur 1 ist ein Tastsystem 10 gezeigt, das auf einem Tisch 20 einer Werkzeugmaschine befestigt ist. Zur Werkzeugmaschine gehört des weiteren ein relativ zum Tisch 20 bewegbares Werkzeug 40, welches in eine nicht näher dargestellte, um eine Achse B drehbare Spindel der Werkzeugmaschine eingespannt ist. Damit durch die Steuerung der Werkzeugmaschine die Ist-Größe des Werkzeugs 40 berücksichtigt werden kann, wird dieses im rotierenden Zustand in regelmäßigen Abständen vermessen. So kann beispielsweise der Verschleiß des Werkzeugs 40 bei der Ermittlung der zur Werkstückbearbeitung erforderlichen Position der Achse B der Spindel kompensiert werden.

Das Tastsystem 10 umfasst einen Antastteller 2 mit einer Hülse 2.1. Die Hülse 2.1 ist hohlzylindrisch ausgestaltet, so dass ein Antaststift 1, insbesondere ein zylindrischer erster Abschnitt 1.1, durch die Hülse 2.1 aufgenommen werden kann. Zur axialen Sicherung des Antaststifts 1 in der Hülse 2.1 wird radial durch die Hülse 2.1 eine klemmende Schraube gedreht. Weiterhin umfasst der Antaststift 1 eine Sollbruchstelle 1.3, die zwischen dem ersten Abschnitt 1.1 und einem zweiten Abschnitt 1.2 des Antaststifts 1 angeordnet ist. Der zweite Abschnitt 1.2 wird analog wie die Sicherung des ersten Abschnitts 1.1 in einer weiteren Hülse 3 geklemmt. Die Hülse 3 ist mit einer Messeinrichtung im Inneren des Tastsystems 10 verbunden, wobei eine Auslenkung der Hülse 3 (und damit des Antasttellers 2) ein Schaltsignal auslöst, welches über ein Kabel 30 an eine Steuerung übertragen wird.

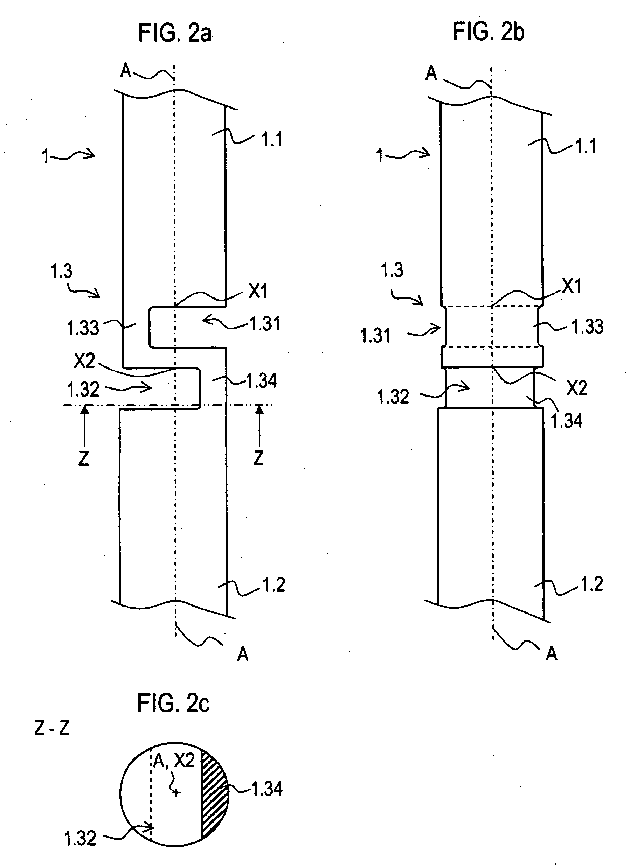

In der Figur 2a ist eine Teil-Seitenansicht des Antaststifts 1 gezeigt. Der Antaststift 1 besteht, wie bereits erwähnt, aus dem ersten Abschnitt 1.1 und dem zweiten Abschnitt 1.2, wobei die beiden Abschnitte 1.1, 1.2 eine zylindrische Grundform haben. Die beiden zylindrischen Abschnitte 1.1, 1.2 sind so angeordnet bzw. ausgerichtet, dass diese eine gemeinsame Längsachse A aufweisen.

Die Sollbruchstelle 1.3 umfasst gemäß dem ersten Ausführungsbeispiel zwei Ausnehmungen 1.31, 1.32 und zwei Stegbereiche 1.33; 1.34. Die Stegbereiche 1.33; 1.34 sind hier bezüglich der Umfangsrichtung um 180° relativ zueinander versetzt angeordnet. Mit anderen Worten sind die beiden Stegbereiche 1.33; 1.34 um die Längsachse A um 180° gedreht angeordnet.

Hergestellt wird ein derartiger Antaststift 1 beispielsweise indem als Halbzeug ein zylindrischer Präzisionsrundstift aus Hartmetall verwendet wird, in den im ersten Schritt durch einen Schleifprozess die Ausnehmungen 1.31 spanabhebend eingearbeitet wird. Dabei wird ein Schleifwerkzeug in Form einer Scheibe senkrecht zur Längsachse A bewegt, so dass das Schleifwerkzeug letztlich so weit in den Antaststift 1 eintaucht, dass dieses von der Längsachse A geschnitten wird. Das Schleifwerkzeug taucht also über die Mitte des Antaststifts 1 in diesen ein. Der Querschnitt der Stegbereiche 1.33, 1.34 ist demnach kleiner als der halbe Querschnitt eines der beiden Abschnitte 1.1, 1.2 (Figur 2c). Bedingt durch die Geometrie und die Vorschubbewegung des Schleifwerkzeugs sind die Ausnehmungen 1.31, 1.32 jeweils von drei ebenen Flächen umrandet, wie dies z. B. in der Figur 2a zu sehen ist.

Nachdem die Ausnehmung 1.31 hergestellt ist, wird der Antaststift 1 um 180° um dessen Längsachse A gedreht und die zweite Ausnehmung 1.32, quasi von der Rückseite her, durch einen analogen Herstellungsschritt herausgearbeitet.

Die Ausnehmungen 1.31, 1.32 sind also so tief, dass diese von der Längsachse A geschnitten werden. Der Antaststift 1 ist demnach so ausgestaltet, dass im Bereich der Sollbruchstelle 1.3 an zwei axial versetzten Punkten X1, X2 die Längsachse A aus der Außenkontur des Antaststifts 1 austritt.

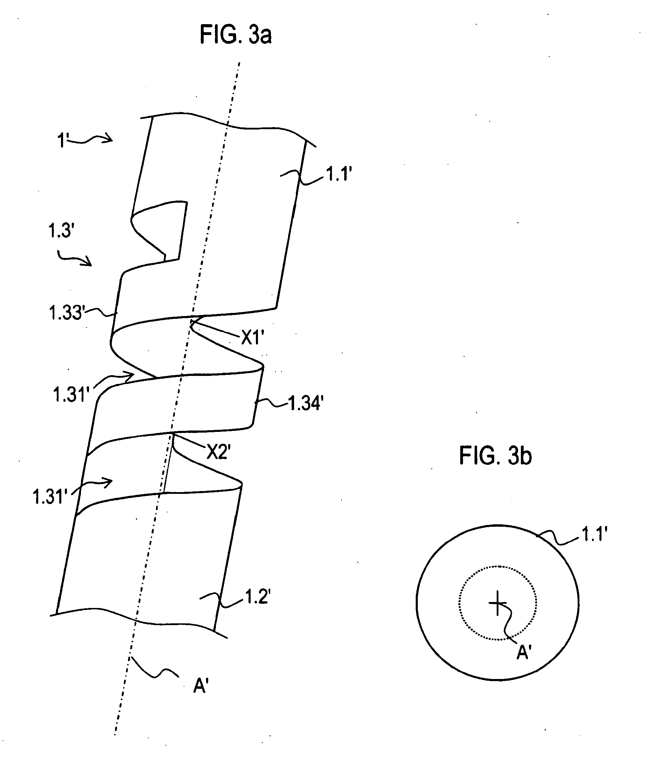

In den Figuren 3a und 3b ist ein zweites alternatives Ausführungsbeispiel gezeigt. Der Antaststift 1 besteht auch hier aus einem ersten Abschnitt 1.1' und einem zweiten Abschnitt 1.2' mit jeweils zylindrischer Grundform und einer gemeinsamen Längsachse A'. Zwischen din Abschnitten 1.1', 1.2' ist die Sollbruchstelle 1.3' angeordnet, die gemäß dem zweiten Ausführungsbeispiel eine wendelförmige Ausnehmung 1.31' umfasst. Zur Herstellung der Ausnehmung 1.31' wird beispielsweise ein Schleifwerkzeug wendelförmig - bezüglich der Längsachse A' - während der Bearbeitung des Antaststifts 1 verfahren. Der dann stehen gebliebene Wendelgang umfasst Stegbereiche 1.33' 1.34', welche auch hier bezüglich der Umfangsrichtung versetzt angeordnet sind. Der Antaststift 1' ist demnach auch in diesem Beispiel so ausgestaltet, dass im Bereich der Sollbruchstelle 1.3' an zwei axial versetzten Punkten X1', X2' die Längsachse A' aus der Außenkontur des Antaststifts 1' austritt.

Das Tastsystem 10 umfasst eine optisch arbeitende Messeinrichtung, durch die eine präzise Funktion des Tastsystems 10 erreichbar ist. Normalerweise wird das Werkzeug 40 während der Prüfroutine in der Weise zum Antastteller gefahren, dass die Längsachse A und die Werkzeugachse B in der Figur 1 parallel sind, das heißt, das Werkzeug 40 nähert sich dem Antastteller 2 aus radialer Richtung (bezogen auf den Antastteller 2), bzw. bewegt sich in der X-Y-Ebene. Wenn schließlich das Werkzeug 40 auf den Antastteller 2 trifft können auf den Antaststift 1 bzw. 1' vergleichsweise große Kräfte wirken, die aber keine Schäden in der Messeinrichtung hervorrufen. Durch die erfindungsgemäße Ausgestaltung der Sollbruchstelle 1.3, bzw. 1.3' ist der Antaststift 1 bzw. 1' so widerstandsfähig, dass dieser nicht bricht und auch nicht nennenswert verformt wird.

Wenn aber aus irgendeinem Grund das Werkzeug 40 aus Z-Richtung, also parallel zur Längsachse A bzw. A' auf den Antastteller 2 trifft, würde der Antaststift 1 bzw. 1' in die Messeinrichtung hinein gedrückt werden, wodurch diese beschädigt werden kann. Die erfindungsgemäße Ausgestaltung der Sollbruchstelle 1.3, bzw. 1.3' schützt die Messeinrichtung vor Beschädigung bei dieser unerwünschten Bewegung des Werkzeugs 40, indem ein Bruch des Antaststifts 1 bzw. 1' noch vor Erreichen einer Überlastung erfolgt. Bei dem erfindungsgemäßen Tastsystem 10, bzw. Antaststift 1, 1' ist die Bruchkraft bezüglich Kräften, die parallel zur X-Y-Ebene liegen größer als bezüglich Kräften, die orthogonal dazu ausgerichtet sind und demnach parallel zur Z-Achse oder zur Längsachse A bzw. A' wirken.

## Patentansprüche

1. Antaststift (1) für Tastsysteme mit Messeinrichtungen, mit einer Sollbruchstelle (1.3, 1.3'), welche zwischen einem ersten Abschnitt (1.1, 1.1') und einem zweiten Abschnitt (1.2, 1.2') des Antaststifts (1) angeordnet ist, wobei die beiden Abschnitte (1.1, 1.2; 1.1', 1.2') jeweils eine Längsachse (A, A') aufweisen, **dadurch gekennzeichnet, dass** im Bereich der Sollbruchstelle (1.3, 1.3'), welche
a) zwei Ausnehmungen (1.31, 1.32) umfasst, die axial versetzt angeordnet sind, oder
b) eine wendelförmige Ausnehmung (1.31') umfasst,
zumindest eine der Längsachsen (A, A') zumindest an zwei axial versetzten Punkten (X1, X2; X1', X2') aus der Außenkontur des Antaststifts (1) austritt, in der Weise dass die zwei Ausnehmungen (1.31, 1.32; 1.31') oder die wendelförmige Ausnehmung (1.31') von der zumindest einen Längsachse (A, A') geschnitten werden, so dass durch die Sollbruchstelle (1.3, 1.3') wirksam auch Überbelastungen der Messeinrichtung parallel zur Längsachse (A, A') des Antaststifts (1) vermeidbar sind.

2. Antaststift (1) gemäß dem Anspruch 1, **dadurch gekennzeichnet, dass** die beiden Abschnitte (1.1, 1.2; 1.1', 1.2') eine zylindrische Grundform mit einer gemeinsamen Längsachse (A, A') aufweisen.

3. Antaststift (1) gemäß dem Anspruch 1 oder 2, **dadurch gekennzeichnet, dass** die Sollbruchstelle (1.3, 1.3') Stegbereiche (1.33; 1.34; 1.33') aufweist, die sich in axialer Richtung erstrecken und bezüglich der Umfangsrichtung versetzt angeordnet sind.

4. Antaststift (1) gemäß einem der vorhergehenden Ansprüche, **dadurch gekennzeichnet, dass** der maximale Durchmesser der Sollbruchstelle (1.3, 1.3') kleiner oder gleich dem Durchmesser des ersten Abschnitts (1.1, 1.1') oder der des zweiten Abschnitts (1.2, 1.2') ist.

5. Antaststift (1) gemäß einem der vorhergehenden Ansprüche, **dadurch gekennzeichnet, dass** die beiden Abschnitte (1.1, 1.2; 1.1', 1.2') den gleichen Durchmesser aufweisen.

6. Antaststift (1) gemäß einem der vorhergehenden Ansprüche, **dadurch gekennzeichnet, dass** die Sollbruchstelle (1.3) zwei Ausnehmungen (1.31, 1.32) und zwei Stegbereiche (1.33; 1.34) umfasst, wobei diese bezüglich der Umfangsrichtung um 180° versetzt angeordnet sind.

7. Antaststift (1) gemäß dem Anspruch 6, **dadurch gekennzeichnet, dass** die Ausnehmungen (1.31, 1.32) jeweils von drei ebenen Flächen umrandet sind.

8. Tastsystem (10) mit einem Antaststift (1) und einer Messeinrichtung, welche bei Auslenkung des Antaststifts (1) ein Schaltsignal auslöst, **dadurch gekennzeichnet, dass** der Antaststift (1) gemäß dem Anspruch 1 ausgestaltet ist.

9. Tastsystem (10) gemäß dem Anspruch 8, **dadurch gekennzeichnet, dass** die Messeinrichtung nach einem optischen oder druckempfindlichen Messprinzip arbeitet.

10. Tastsystem (10) gemäß dem Anspruch 8 oder 9, mit einem Antastteller, **dadurch gekennzeichnet, dass** der Antaststift (1) zwischen dem Antastteller (2) und der Messeinrichtung zur Übertragung der Auslenkung angeordnet ist.

## Claims

1. A touch pin (1) for touch-sensing systems comprising measuring devices, comprising a predetermined breaking point (1.3, 1.3'), which is arranged between a first section (1.1, 1.1') and a second section (1.2, 1.2') of the touch pin (1), wherein the two sections (1.1, 1.2; 1.1', 1.2') in each case encompass a longitudinal axis (A, A'), **characterized in that** in the area of the predetermined breaking point (1.3, 1.3'), which comprises
a) two recesses (1.31, 1.32), which are arranged so as to be axially offset or
b) a helical recess (1.31'),
at least one of the longitudinal axes (A, A') protrudes the outer contour of the touch pin (1) at two axially offset points (X1, X2; X1', X2') in such a manner that the two recesses (1.31, 1.32; 1.31') or the helical recess (1.31') are intersected by the at least one longitudinal axis (A, A'), so that overloads of the measuring device parallel to the longitudinal axis (A, A') of the touch pin (1) can also be avoided effectively.

2. The touch pin (1) according to claim 1, **characterized in that** the two sections (1.1, 1.2; 1.1', 1.2') encompass a basic cylindrical shape comprising a common longitudinal axis (A, A').

3. The touch pin (1) according to claim 1 or 2, **characterized in that** the predetermined breaking point (1.3, 1.3') encompasses bar areas (1.33; 1.34; 1.33'), which extend in axial direction and which are arranged so as to be offset with reference to the peripheral direction.

4. The touch pin (1) according to one of the preceding claims, **characterized in that** the maximum diameter of the predermined breaking point (1.3, 1.3') is smaller than or equal to the diameter of the first section (1.1, 1.1') or of the second section (1.2, 1.2').

5. The touch pin (1) according to one of the preceding claims, **characterized in that** the two sections (1.1, 1.2; 1.1', 1.2') encompass the same diameter.

6. The touch pin (1) according to one of the preceding claims, **characterized in that** the predetermined breaking point (1.3) comprises two recesses (1.31, 1.32) and two bar areas (1.33; 1.34), wherein these are arranged so as to be offset by 180° with reference to the peripheral direction.

7. The touch pin (1) according to claim 6, **characterized in that** the recesses (1.31, 1.32) are in each case framed by three plane surfaces.

8. A touch system (10) comprising a touch pin (1) and a measuring device, which triggers a switch signal in response to the displacement of the touch pin (1), **characterized in that** the touch pin (1) is embodied according to claim 1.

9. The touch system (10) according to claim 8, **characterized in that** the measuring device operates according to an optical or pressure-sensitive measuring principle.

10. The touch system (10) according to claim 8 or 9 comprising a touch disk, **characterized in that** the touch pin (1) is arranged between the touch disk (2) and the measuring device for transferring the displacement.

## Revendications

1. Palpeur (1) pour un système de détection avec des dispositifs de mesurage, avec une zone de rupture privilégiée (1.3, 1.3') disposée entre un premier tronçon (1.1, 1.1') et un deuxième tronçon (1.2, 1.2') du palpeur (1), les deux tronçons (1.1, 1.1' ; 1.2, 1.2') comportant chacun un axe longitudinal (A, A'), **caractérisé en ce que** dans la région de la zone de rupture privilégiée (1.3, 1.3'), qui
a) comprend deux évidements (1.31, 1.32) disposés de façon axialement décalée, ou
b) comprend un évidement en spirale (1.31'),
au moins l'un des axe longitudinal (A, A') sort du contour extérieur du palpeur (1), au moins en deux points axialement décalés (X1, X2 ; X1', X2'), de sorte que les deux évidements (1.31, 1.32 ; 1.31') ou l'évidement en spirale (1.31') sont coupés par l'au moins un axe longitudinal (A, A'), si bien que la zone de rupture privilégiée (1.3, 1.3') permet d'éviter efficacement même des surcharges du dispositif de mesurage parallèlement à l'axe longitudinal (A, A') du palpeur (1).

2. Palpeur (1) selon la revendication 1, **caractérisé en ce que** les deux tronçons (1.1, 1.2 ; 1.1', 1.2') comporte une forme de base cylindrique avec un axe longitudinal commun (A, A').

3. Palpeur (1) selon l'une des revendications 1 ou 2, **caractérisé en ce que** la zone de rupture privilégiée (1.3, 1.3') comporte des régions de branches (1.33 ; 1.34 ; 1.33') s'étendant dans le sens axial et étant disposées de façon décalée par rapport au sens du pourtour.

4. Palpeur (1) selon l'une des revendications précédentes, **caractérisé en ce que** le diamètre maximal de la zone de rupture privilégiée (1.3, 1.3') est inférieur ou égal au diamètre du premier tronçon (1.1, 1.1') ou du deuxième tronçon (1.2, 1.2').

5. Palpeur (1) selon l'une des revendications précédentes, **caractérisé en ce que** les deux tronçons (1.1, 1.2 ; 1.1', 1.2') présentent un diamètre identique.

6. Palpeur (1) selon l'une des revendications précédentes, **caractérisé en ce que** la zone de rupture privilégiée (1.3) comprend deux évidements (1.31, 1.32) et deux régions de branches (1.33 ; 1.34), qui sont décalés de 180° par rapport au sens du pourtour.

7. Palpeur (1) selon la revendication 6, **caractérisé en ce que** les évidements (1.31, 1.32) sont respectivement encadrés par trois surfaces planes.

8. Système de détection (10) avec un palpeur (1) et un dispositif de mesurage déclenchant un signal de commutation lors d'une déviation du palpeur (1), **caractérisé en ce que** le palpeur (1) est conçu selon la revendication 1.

9. Système de détection (10) selon la revendication 8, **caractérisé en ce que** le dispositif de mesurage travaille selon un principe de mesurage optique ou sensible à la pression.

10. Système de détection (10) selon l'une des revendications 8 ou 9, avec une coupelle de détection, **caractérisé en ce que** le palpeur (1) est disposé entre la coupelle de détection (2) et le dispositif de mesurage, pour la transmission de la déviation.
